# EUROPEAN PATENT SPECIFICATION

(11) **EP 4 048 021 B1**
(45) Date of publication and mention of the grant of the patent: **06.12.2023**
(21) Application number: 21158120.2
(22) Date of filing: 19.02.2021
(51) Int. Cl.: H04W 84/12, H04W 4/50, H04L 61/5007

(54) **METHODS AND DEVICES FOR VOICE OVER WIFI CALLS**
VERFAHREN UND VORRICHTUNGEN FÜR SPRACHANRUFE ÜBER WLAN
PROCÉDÉS ET DISPOSITIFS POUR APPELS VOCAUX PAR WIFI

(43) Date of publication of application: 24.08.2022
(73) Proprietor: Deutsche Telekom AG, 53113 Bonn (DE)
(72) Inventor: JERBI, Walid, 53639 Königswinter (DE); SCHMIDT, Holger, 41844 Wegberg (DE)
(74) Representative: Vossius & Partner Patentanwälte Rechtsanwälte mbB

(56) References cited:
- CN-B- 108 260 098
- US-A1- 2005 286 489

## Description

The present disclosure relates to methods and devices for Voice over Wifi calls, in particular for use in wireless network nodes.

Wifi calling, in short Voice over Wifi (VoWifi), is a technology that enables regular cellular users to use a Wifi connection for making voice or even video calls build on an operator's IP-Multimedia Subsystem (IMS) network. The Wifi (IEEE802.11x) connection is just the last hop from a network perspective towards the user. The Wifi Access Point can be connected via a cellular network for providing the packet data connectivity or via other means that provide general internet access.

The operator that serves the callee/terminating user does get some call termination fee from the operator hosting the caller/originating user for using his network infrastructure to enable the phone call from an end-to-end perspective. The originating network operator charges the caller and the terminating network operator efforts are compensated via the termination fee by the originating network operator.

In highly regulated markets, the mobile termination inter-carrier/provider fees (which assume the operator has a cellular network and are highest) differs from fixed termination fees (which assumes the operator has a fixed-line network) and also differs from an internet termination fee (which means the provider has only applications working over the internet but no own networks/infrastructure and the fees are lowest).

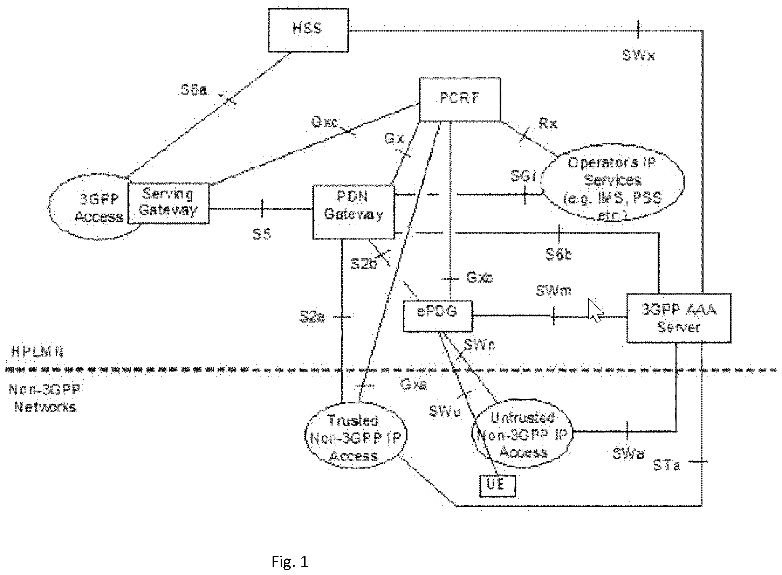

VoWifi is a well-defined service and described in 3GPP and GSMA. The architecture of VoWifi as in 3GPP TS 23.402 is illustrated in Fig. 1.

As of today, a precise classification of Wifi calls is not implemented and not standardized. This leads to a grey zone in interpreting which termination fee is applicable. This leads to an unfair simplification of the topic, where some providers claim that solely the use of mobile numbers is enough to justify the high mobile termination fees. Others claim that owning a cellular network is enough to justify the high mobile termination fees.

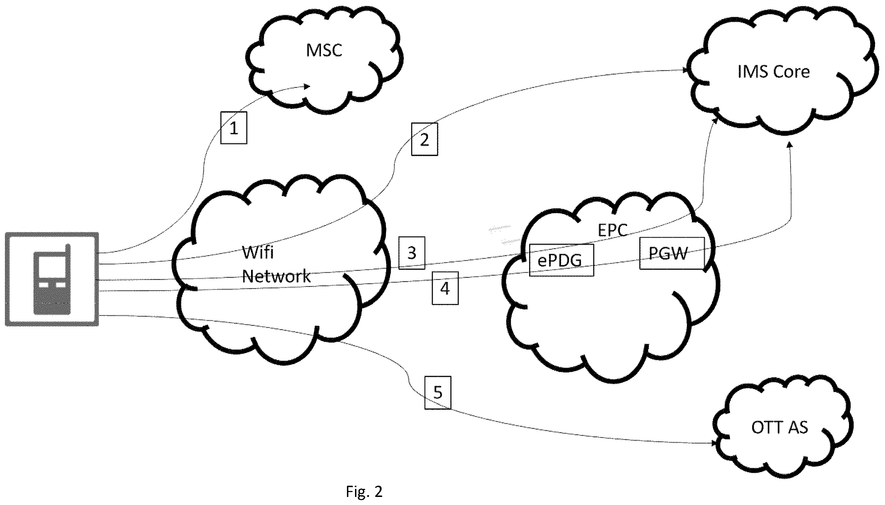

Wifi calling is stated above as a call transported over Wifi as the last hop technology that could be understood as a pure internet call done over a Wifi hot spot somewhere (see option 5 in Figure 2). This assumption is misleading, not correct in all cases and leads to a loss of valuable revenues for many operators. The problems that arise are outlined by following four examples:
1 The Wifi calling device is connected via the internet to the operator's Packet Core Network (EPC, Evolved Packet Core) using the Wifi AP as some kind of radio network emulation (see option 3 in Figure 2). This setup is called ePDG based VoWifi calling and one of its benefit is that it provides seamless handover between VoWifi and VoLTE (Voice over LTE), i.e. the user can move out of the Wifi coverage while continuing the voice call seamlessly. Still no licensed radio ressources in use and thus internet termination fees are here appropriate.
2 The Wifi calling device is directly connected to an operator IMS or Voip/Over the Top (OTT) network/Application Server (AS), where this operator owns mobile numbers but does not own a mobile cellular network and thus does not own licensed radio ressources (see option 2 and 5 in Figure 2). This shall be considered as a pure internet call.
3 If a mobile device is connected to a cellular network but is being used as a Wifi hotspot (tethering), then Wifi calling over this tethered hotspot is surely using the mobile network of this operator as transport network and the call cannot be reduced to an internet call with only internet termination fees.
4 If a mobile device is connected to a fix line network (xDSL, Cable, Fibre..), then wifi calling is using the fixed network of this operator and thus shall claim fixed line termination fees.

That is, the charging solution for VoWifi today only foresees the signaling of the access as being a Wifi access to the billing domain. This information alone does not give full transparency about the infrastructure used in the background and thus can lead to revenue loss or overbilling, depending on the agreement between the interconnection carriers/providers.

As described above, interconnection termination fees can be regulated by the authorities as in most of the European countries where the amount of the fee is in principle justified by the investment in an infrastructure being mainly: (a) a mobile cellular infrastructure ("high" termination fees), (b) a fixed line infrastructure ("medium" termination fees), and (c) just applications running over the internet ("low" termination fees).

The situations today are that the billing is based on the called number, meaning if the called number is a mobile number then termination fees are mobile termination fees. If it is a fixed line number, then the fixed line termination fees apply. The problem here is that provider can acquire mobile number ranges from the regulation authority without being a mobile operator and using just interconnected OTT applications. In this situation claiming these fees causes unjustified costs for the operators where the call is originated. In addition, the billing is based on the access technology of the termination operator.

CN 108260098 A relates to the field of communication technologies, in particular to a flow rate fee method, a flow rate fee system and related devices of a target wireless hotspot.

US 2005/286489 A1 relates to authentication of a wireless terminal, and in particular to an authentication system and method having mobility in a public wireless local area network (LAN) which allow a wireless terminal to access an access point of one subnet and receive authentication, and validate authentication and charging even if the wireless terminal moves to an access point of a different subnet.

Therefore, there is a need to overcome the above-mentioned defeciencies of the state of the art. Thus, it is an object of the present invention to overcome the above-mentioned problems and to provide an efficient way for determining the connections involved in a VoWifi call, which is compatible with current standards.

The above-mentioned objects are achieved with the features of the independent claims. Dependent claims define preferred embodiments of the invention.

The present invention relates to a wireless communication method for use in a first wireless network node, the method comprising: receiving a local IP address of a user equipment, UE, at the first wireless network node; determining if the received local IP address of the UE is known to the first wireless network node; and transmitting a message comprising information on the determination to a second wireless network node, wherein the first wireless network node is a Packet Data Network Gateway, PGW or a Session management function, SMF.

The second wireless network node is preferably a Policy and Charging Rules Function, PCRF, or a Proxy-Call Session Control Function, P-CSCF.

The PCRF and P-CSCF are only an examples for a second wireless network node in a 4G network. Alternatively, the second wireless network node may be any equivalent node in the newer network generations like 5G such as a Policy control function, PCF.

If the second wireless network node is a PCRF, the communication between the first and the second wireless network node may be a direct communication.

If the the second wireless network node is a P-CSCF, the communication between the first and the second wireless network node may be an indirect communication (e.g. with a PCRF located in between that forwards the respective communication).

Preferably, determining if the received local IP address of a UE is known to the first wireless network node comprises: determining if the received local IP address belongs to a cellular network.

The information preferably comprises an indication that the UE local provider is a cellular network.

Preferably, determining if the received local IP address of a UE is known to the first wireless network node comprises: determining if the received local IP address belongs to a fixed network.

The information preferably comprises an indication that the UE local provider is a fixed network.

The information preferably comprises an indication that the UE is connected via internet if the received local IP address of the UE is not known to the first wireless network node. Preferably, the received local IP address of the UE is not known to the first wireless network node when the received local IP address does neither belong to a cellular network nor to a fixed network.

The present invention also relates to a wireless communication method for use in a second wireless network node , the method comprising: receiving, from a first wireless network node, a message comprising information on whether a local IP address of a user equipment, UE, is known to the first wireless network node, wherein

the first wireless network node is a Packet Data Network Gateway, PGW or a Session management function, SMF.

The second wireless network node is preferably a Policy and Charging Rules Function, PCRF, or a Proxy-Call Session Control Function, P-CSCF.

The PCRF and P-CSCF are only an examples for a second wireless network node in a 4G network. Alternatively, the second wireless network node may be any equivalent node in the newer network generations like 5G such as a Policy control function, PCF.

The information preferably comprises an indication that the UE local provider is a cellular network, or the information comprises an indication that the UE local provider is a fixed network, or the information comprises an indication that the UE is connected via internet if the local IP address of the UE is not known to the first wireless network node.

Preferably, the local IP address of the UE is not known to the first wireless network node when the local IP address does neither belong to a cellular network nor to a fixed network. Preferably, the wireless communication method further comprises: transmitting the information to a charging function, preferably as part of the Untrusted Wireless Access Network-,UWAN, User-Location Info.

Preferably, the wireless communication method further comprises: transmitting the information to a charging function via a Multimedia Telephony Application Server, MMTELAS, preferably as an own Session Initiation Protocol, SIP, header or as part of a P-Access-Network-information-header or directly from the P-CSCF to the charging domain.

The present invention also relates to a first wireless network node, comprising: a communication unit, configured to receive a local IP address of a user equipment, UE; and a processor configured to determining if the received local IP address of the UE is known to the first wireless network node, wherein the communication unit is further configured to transmitting a message comprising information on the determination to a second wireless network node, wherein the first wireless network node is a Packet Data Network Gateway, PGW, or a Session management function, SMF. Various embodiments may preferably implement the following features.

The processor is preferably further configured to perform the wireless communication any of the method steps as described above with respect to the method for use in a first netword node.

The present invention also relates to a second wireless network node, comprising: a communication unit, configured to receive, from a first wireless network node, a message comprising information on whether a local IP address of a user equipment, UE, is known to the first wireless network node, wherein the first wireless network node is a Packet Data Network Gateway, PGW, or a Session management function, SMF.

Various embodiments may preferably implement the following features.

The communication unit is preferably further configured to perform the wireless communication method any of the method steps as described above with respect to the method for use in a first netword node.

It is clear that steps of receiving and transmitting of information in the first and/or second network node may be ultimately executed by a communication unit (e.g. a receiver, a transmitter or a transceiver unit). However, the processor may be configured to instruct the respective unit to execute the respective function. That is, if it is stated that the processor is configured to transmit or receive, it is clear that the processor is only instructing or controlling a respective transmitting or receiving unit. In addition, if a communication unit is configured to execute certain functions, the communication unit may only be a first or last instance to handle the respective functionality, but the processor may be involved as well.

The present disclosure also relates to a computer program product comprising a computer-readable program medium code stored thereupon, the code, when executed by a processor, causing the processor to implement a wireless communication method as described above.

The various embodiments of the present disclosure provide a method that can be easily standardized to identify when it is justified to claim mobile termination fees or fixed termination fees or internet termination fees.

The various embodimnents as described above, provide a solution that can be used by every provider to achieve transparency and fairness. Charging Wifi calls based solely on the use of mobile/fixed line numbers or assuming that Wifi calls are always internet calls as of today is then replaced by a charging concept that checks if a transport technology (fixed-line like xDSL, Fiber, cable...or mobile like 4G or 5G...) belonging to the terminating network has been used and thus provides additional information to decide which termination fee is appropriate. That is, overrating or underrating of calls can be avoided and Wifi-Calls will be billed in a transparent way.

In addition, the existing standards (like 3GPP Standards) are extended and the extension can be easily adopted in these standards.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig. 1 is a schematic illustration architecture of VoWifi as in 3GPP TS 23.402 according to an embodiment of the present disclosure.
Fig. 2 is a schematic illustration of Wifi calling realization options according to embodiments of the present disclosure.
Fig. 3a-e are schematic illustrations of different connection scenarios according to embodiments of the present disclosure.
Fig. 4 is a flow chart for transporting the UE-Local-IP-Address according to an embodiment of the present disclosure.
Fig. 5 is a flow chart of a Wifi IP-Address allocated by a cellular network of the same provider according to an embodiment of the present disclosure.
Fig. 6 is a flow chart of a Wifi IP-Address allocated by a fixed line network of the same operator according to an embodiment of the present disclosure.
Fig. 7 is a flow chart for reporting of the UE-Local-Provider information to the charging domain according to an embodiment of the present disclosure.

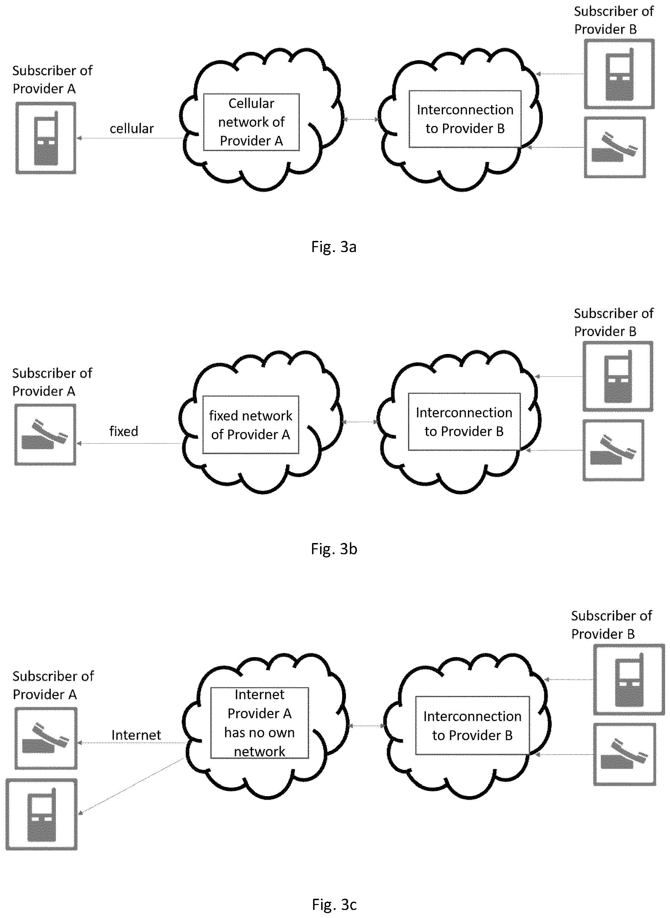

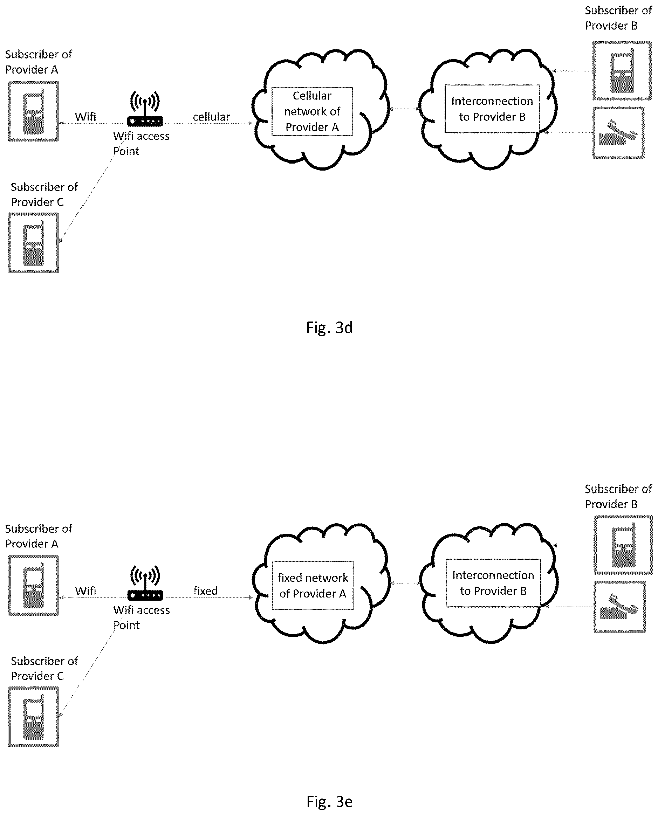

With reference to Figs. 3a to 3e, the different connection scenarios in Wifi calling are illustrated. In addition, the current billing determination that is based on the access technology of the termination operator are described for each of these scenarios.

In particular, Fig. 3a illustrates subscriber of provider A (left side) being directly connected to a cellular network of provider A and subscriber B being interconnected to provider B (right side). In this scenario mobile termination fees would apply.

Fig. 3b illustrates subscriber of provider A (left side) being directly connected to a fixed network of provider A and subscriber B being interconnected to provider B (right side). In this scenario fixed line fees would apply.

Fig. 3c illustrates subscriber of internet provider A (left side) being connected via internet, wherein provider A has no own network, and subscriber B being interconnected to provider B (right side). In this scenario internet termination fees would apply.

In the scenario according to Fig. 3c, using a Wifi access does not exclude the use of cellular network or a fixed line network of the same provider. Fig, 3d illustrates a first possibility, where subscriber B calls subscriber A. Here, provider A can claim mobile termination fees from provider B as its mobile network is used in the call. When subscriber B calls subscriber C, provider C cannot claim mobile termination fees, because the cellular network in use belongs to provider A and therefore for provider C the call would be treated as an internet terminated call.

The same logic applies when a fixed line is used as illustrated in Figure 3e.

This results in a loss of revenue as internet termination fees are applied, although the infrastructure of the provider can be used for transporting the call. The state-of-the-art solution today only signals the use of Wifi access to the billing domain without providing any information on the sub cases explained above.

A detailed implementation description of the VoWifi service can be found in the GSMA Document N2020.02-VoWifi service description. All the call flows that are used herein are based on the LTE EPC architecture and reference points like Rx and Gx using the diameter protocol. Still, the disclosure can be easily implemented on the next 5G (and newer) architecture and the service-based interfaces replacing the reference points implementing for instance diameter.

After the VoWiFi UE Attachment and IMS Registration sequence (Untrusted) call flow from the GSMA document, the UE is attached and registered. It has two IP-addresses: (1) an IP address, which is used by the UE within the Untrusted Non-3GPP IP Access Network (Wifi) to get IP connectivity towards the ePDG. In fact, this is the IP allocated by the Wifi Hotspot/ Access Point. This IP is called UE Local IP Address and is basically the end point of the IPsec tunnel between the UE and the ePDG; (2) one IP address, which is used by the UE towards the external PDNs (in our case the IMS PDN, other IP-Addresses for other PDNs can also be allocated like for HOS PDN) via the allocated PDN GW(s). The ePDG receives this allocated IP address within the GTP Create Session Response and the ePDG is responsible for delivering the IP address to the UE.

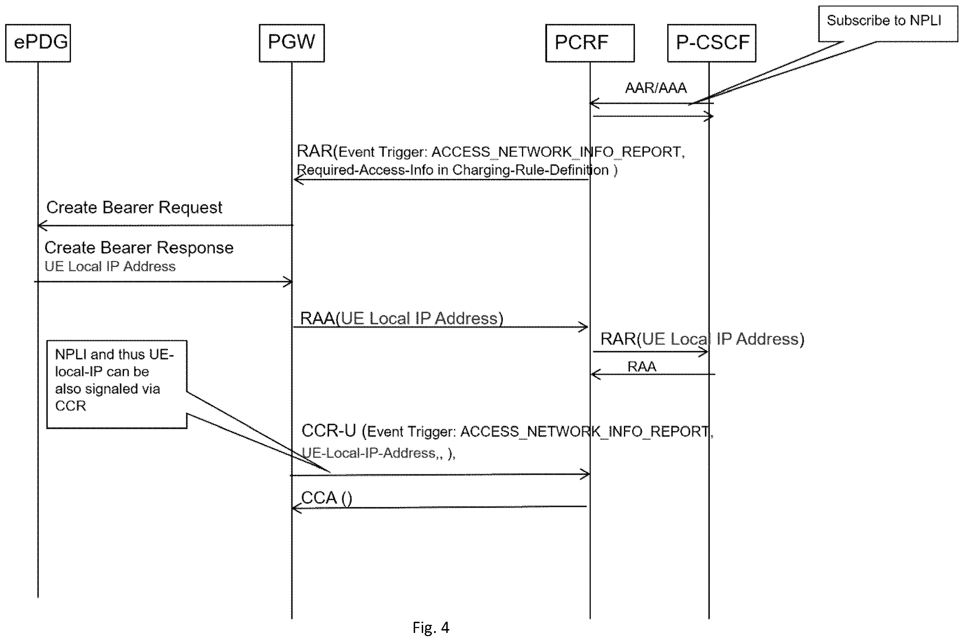

According to the VoWiFi UE to VoWiFi UE Voice Call Establishment - Originating side message sequence call flow from the GSMA document, if the P-CSCF is configured to subscribe to Network Provided Location Information (NPLI) (AAR Message from P-CSCF to PCRF), the call flow illustrated in Fig. 4 is obtained (simplified to the sequence of interest).

In particular, with reference to Fig. 4, the following flows can be identified:
1. P-CSCF subscribes to Network Provided Location Information in the diameter AAR request on the Rx interface.
2. The PCRF requires then from the PDN-GW (PGW) the network location information.
3. PGW sends a create bearer request towards the ePDG.
4. ePDG answers with a create bearer response, which contains the UE-Local-IP-address.
5. PGW sends a diameter RAA to PCRF which contains the UE-Local-IP-address.
6. PCRF sends a diameter RAR to P-CSCF which contains the UE-Local-IP-address.
7. Messages like CCR can also transport the UE-Local-IP-address to PCRF.

As per point 4, the PGW gets the UE-Local-IP-address. PGW is also the node that allocates IP-addresses to the mobile UEs. At this point, according to an embodiment, a procedure is added on the PGW to check if this IP-address belongs to the pool of addresses the PGW administrates. Even if there can be more than one PGW instance in a network, it is assumed that the information about the IP-addresses that will be assigned to UEs is known to each PGW instance. If the PGW finds a match, it can be determined that the VoWifi call is basically behind a cellular network of the same operator. Thus, the PGW adds this information in a separate field. When using the diameter protocol, for example, a new AVP that may be called UE-Local-Provider may be added with the possible values: 3GPP-Cellular-Network; BBF-Network (Broadband Forum); Internet.

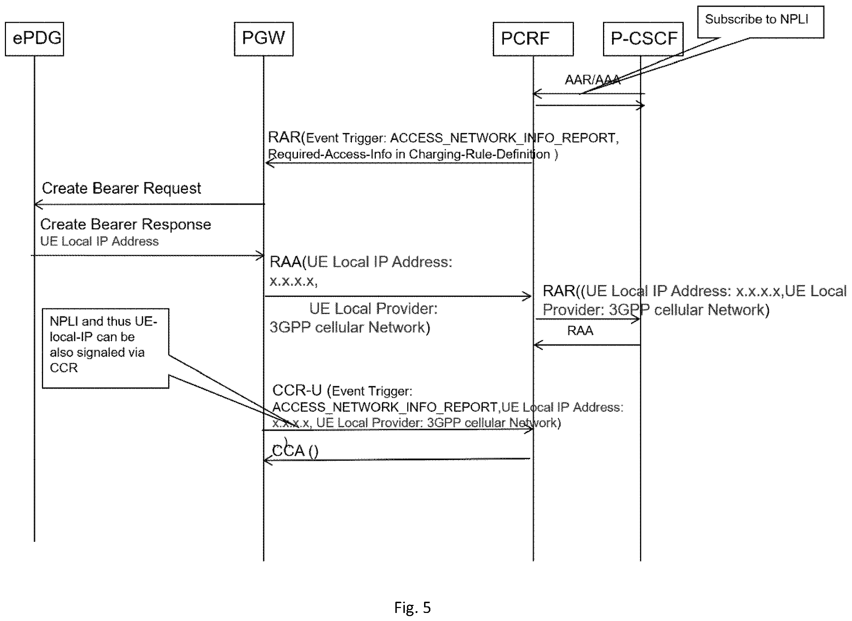

In the case of an IP-address match, the call flow looks like the one illustrated in Fig. 5, wherein the additional information on the UE local provider (3GPP cellular network) in the diameter RAA.

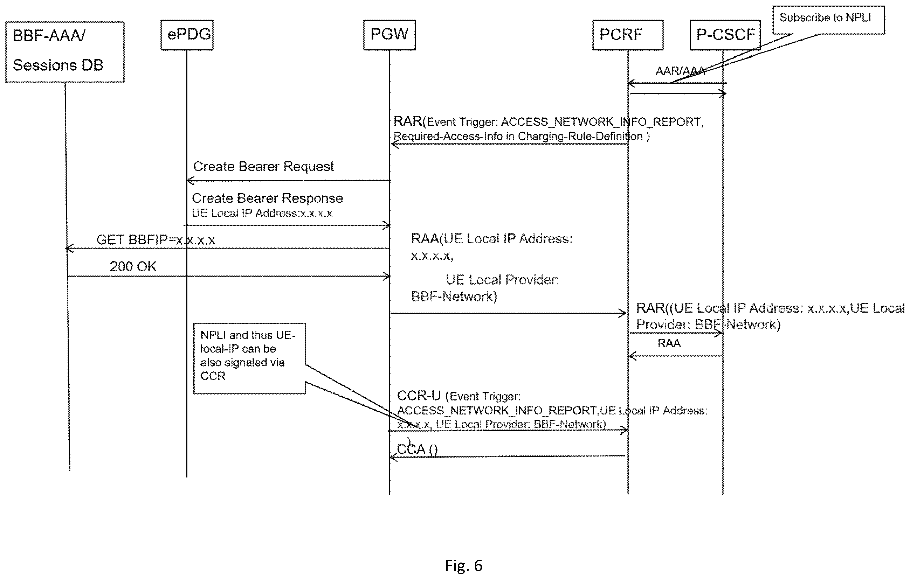

For operators who operate fixed and mobile networks, a new interface (preferably a web service like a rest API) between PGW and the BBF AAA/ Sessions DB may be introduced to check if the UE-local-IP-address belongs to the fixed network pool. The respective call flow is illustrated in Fig. 6. In particular, the respective information obtained by the use of said interface (BBF-AAA/session DB) is conveyd in the diameter RAA.

If there is no match (neither in cellular nor in fixed line) than the PGW may write internet in the UE Local Provider AVP.

Next, as the information about the UE-Local-Provider has reached the P-CSCF, the P-CSCF may add this information into the ACR and send it to the charging Function if the charging solution of the operator is based on correlating many ACRs (Accounting records) from many IMS network.

This may preferably be done by extending the UWAN-User-Location-Info defined in 3GPP 32.299 as follows:

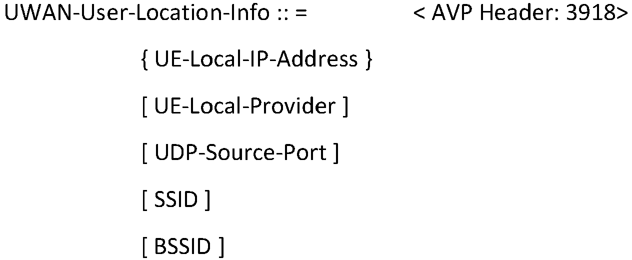

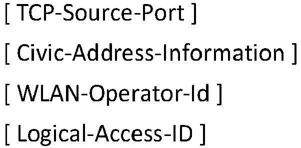

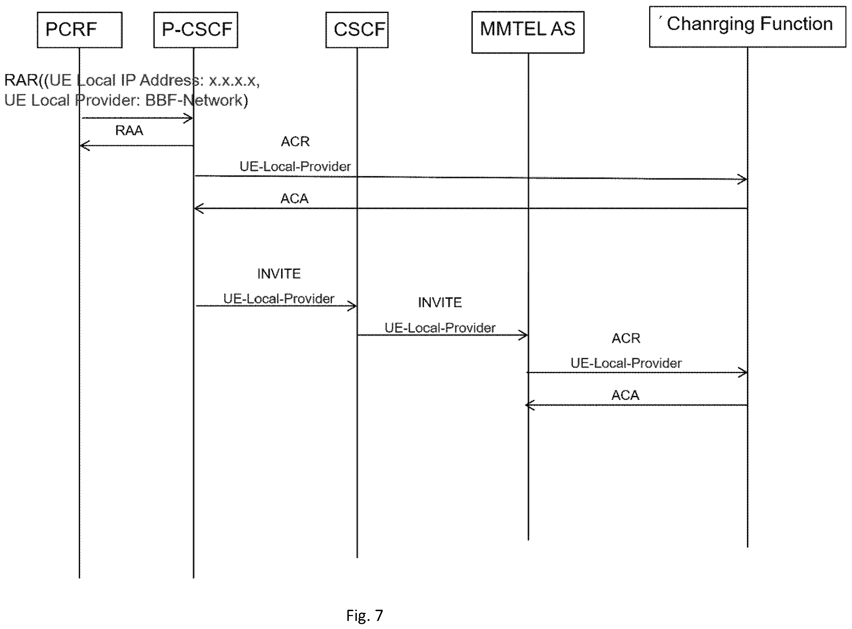

The P-CSCF shall add this information into the SIP signaling as well, so that it reaches the Multimedia telephony Application Server, as this application server may be used as the single point of truth for the charging information. The UE-local-provider information may either be transported as an own SIP header or as part of the P-access-network-information-header. A respective simplified call flow is depicted in Fig. 7.

Thus, the charging function has the information about the called number and the used access which is Wifi plus the UE-Local-Provider information. Based on this, the billing domain can decide which fee is the appropriate one.

While various embodiments of the present disclosure have been described above, it should be understood that they have been presented by way of example only. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is to be accorded the widest scope consistent with the novel features and principles disclosed herein, as recited in the claims below.

## Claims

1. A wireless communication method for use in a first wireless network node, for determining the connections involved in a Voice over Wireless-Fidelity, VoWifi, call that is performed by means of a user equipment, UE, the method comprising:
receiving a local IP address of the UE, at the first wireless network node;
determining if the received local IP address of the UE is known to the first wireless network node; and
transmitting a message comprising information on the determination to a second wireless network node,
wherein the first wireless network node is a Packet Data Network Gateway, PGW, or a Session management function, SMF.

2. The wireless communication method of claim 1, wherein the second wireless network node is a Policy and Charging Rules Function, PCRF, or a Proxy-Call Session Control Function, P-CSCF, or a Policy control function, PCF.

3. The wireless communication method of claim 1 or 2, wherein determining if the received local IP address of a UE is known to the first wireless network node comprises:
determining if the received local IP address belongs to a cellular network.

4. The wireless communication method of claim 3, wherein the information comprises an indication that the UE local provider is a cellular network.

5. The wireless communication method of any of claims 1 to 4, wherein determining if the received local IP address of a UE is known to the first wireless network node comprises: determining if the received local IP address belongs to a fixed network and preferably wherein the information comprises an indication that the UE local provider is a fixed network.

6. The wireless communication method of any of claims 1 to 5, the information comprises an indication that the UE is connected via internet if the received local IP address of the UE is not known to the first wireless network node, wherein preferably the received local IP address of the UE is not known to the first wireless network node when the received local IP address does neither belong to a cellular network nor to a fixed network.

7. A wireless communication method for use in a second wireless network node, for determining the connections involved in a Voice over Wireless-Fidelity, VoWifi, call that is performed by means of a user equipment, UE, the method comprising:
receiving, from a first wireless network node, a message comprising information on whether a local IP address of the UE that is received by the first wireless network node, is known to the first wireless network node, wherein the first wireless network node is a Packet Data Network Gateway, PGW, or a Session management function, SMF.

8. The wireless communication method of any one of claims 7, wherein the second wireless network node is a Policy and Charging Rules Function, PCRF, or or a Policy control function, PCF.

9. The wireless communication method claim 7 or 8, wherein the information comprises an indication that the UE local provider is a cellular network, or
wherein the information comprises an indication that the UE local provider is a fixed network,
or
the information comprises an indication that the UE is connected via internet if the local IP address of the UE is not known to the first wireless network node, wherein preferably the local IP address of the UE is not known to the first wireless network node when the local IP address does neither belong to a cellular network nor to a fixed network.

10. The wireless communication method of any one of claims 7 to 9, further comprising:
transmitting the information to a charging function, preferably as part of the Untrusted Wireless Access Network-,UWAN, User-Location Info and preferably the method further comprising:
transmitting the information to a charging function via a Multimedia Telephony Application Server, MMTELAS, preferably as an own Session Initiation Protocol, SIP, header or as part of a P-Access-Network-Information-header.

11. A first wireless network node, for use to determine the connections involved in a Voice over Wireless-Fidelity, VoWifi, call that is performed by means of a user equipment, UE, the node comprising:
a communication unit, configured to:
receive a local IP address of the UE; and a processor configured to:
determining if the received local IP address of the UE is known to the first wireless network node,
wherein the communication unit is further configured to:
transmitting a message comprising information on the determination to a second wireless network node,
wherein the first wireless network node is a Packet Data Network Gateway, PGW, or a Session management function, SMF.

12. The first wireless network node of claim 11, wherein the processor is further configured to perform the wireless communication method of any one of claims 2 to 6.

13. A second wireless network node, for use to determine the connections involved in a Voice over Wireless-Fidelity, VoWifi, call that is performed by means of a user equipment, UE, the node comprising:
a communication unit, configured to:
receive, from a first wireless network node, a message comprising information on whether a local IP address of the UE that is received by the first wireless network node, is known to the first wireless network node,
wherein the first wireless network node is a Packet Data Network Gateway, PGW, or a Session management function, SMF.

14. The second wireless network node of claim 13, wherein the communication unit is further configured to perform the wireless communication method of any one of claims 8 to 10.

15. A computer program product comprising a computer-readable program medium code stored thereupon, the code, when executed by a processor, causing the processor to implement a wireless communication method recited in any one of claims 1 to 6, or claims 7 to 10.

## Patentansprüche

1. Drahtloses Kommunikationsverfahren zur Verwendung in einem ersten drahtlosen Netzwerkknoten zum Bestimmen der Verbindungen, die an einem Voice over Wireless-Fidelity, VoWifi, Anruf beteiligt sind, der mittels eines Benutzergeräts, UE, durchgeführt wird, wobei das Verfahren aufweist:
Empfangen einer lokalen IP-Adresse des UE am ersten drahtlosen Netzwerkknoten, Bestimmen, ob die empfangene lokale IP-Adresse des UE dem ersten drahtlosen Netzwerkknoten bekannt ist; und
Übertragen einer Nachricht, die Informationen über die Bestimmung aufweist, an einen zweiten drahtlosen Netzwerkknoten,
wobei der erste drahtlose Netzwerkknoten ein Paketdatennetzwerk-Gateway, PGW, oder eine Sitzungsverwaltungsfunktion, SMF, ist.

2. Drahtloses Kommunikationsverfahren nach Anspruch 1, wobei der zweite drahtlose Netzwerkknoten eine Policy and Charging Rules Function, PCRF, oder eine Proxy-Call Session Control Function, P-CSCF, oder eine Policy Control Function, PCF, ist.

3. Drahtloses Kommunikationsverfahren nach Anspruch 1 oder 2, wobei das Bestimmen, ob die empfangene lokale IP-Adresse eines UE dem ersten drahtlosen Netzwerkknoten bekannt ist, aufweist:
Bestimmen, ob die empfangene lokale IP-Adresse zu einem Mobilfunknetzwerk gehört.

4. Drahtloses Kommunikationsverfahren nach Anspruch 3, wobei die Informationen eine Anzeige aufweisen, dass der lokale Anbieter des UE ein Mobilfunknetzwerk ist.

5. Drahtloses Kommunikationsverfahren nach einem der Ansprüche 1 bis 4, wobei das Bestimmen, ob die empfangene lokale IP-Adresse eines UE dem ersten drahtlosen Netzwerkknoten bekannt ist, aufweist: Bestimmen, ob die empfangene lokale IP-Adresse zu einem Festnetz gehört, und wobei die Informationen vorzugsweise eine Anzeige aufweisen, dass der lokale Anbieter des UE ein Festnetz ist.

6. Drahtloses Kommunikationsverfahren nach einem der Ansprüche 1 bis 5, wobei die Informationen eine Anzeige aufweisen, dass das UE über das Internet verbunden ist, wenn die empfangene lokale IP-Adresse des UE dem ersten drahtlosen Netzwerkknoten nicht bekannt ist, wobei vorzugsweise die empfangene lokale IP-Adresse des UE dem ersten drahtlosen Netzwerkknoten nicht bekannt ist, wenn die empfangene lokale IP-Adresse weder zu einem Mobilfunknetzwerk noch zu einem Festnetz gehört.

7. Drahtloses Kommunikationsverfahren zur Verwendung in einem zweiten drahtlosen Netzwerkknoten, um die Verbindungen zu bestimmen, die an einem Voice over Wireless-Fidelity, VoWifi, Anruf beteiligt sind, der mittels eines Benutzergeräts, UE, durchgeführt wird, wobei das Verfahren aufweist:
Empfangen, von einem ersten drahtlosen Netzwerkknoten, einer Nachricht, die Informationen darüber aufweist, ob eine lokale IP-Adresse des UE, die von dem ersten drahtlosen Netzwerkknoten empfangen wird, dem ersten drahtlosen Netzwerkknoten bekannt ist, wobei der erste drahtlose Netzwerkknoten ein Paketdatennetzwerk-Gateway, PGW, oder eine Sitzungsverwaltungsfunktion, SMF, ist.

8. Drahtloses Kommunikationsverfahren nach einem der Ansprüche 7, wobei der zweite drahtlose Netzwerkknoten eine Policy and Charging Rules Function, PCRF, oder eine Policy Control Function, PCF, ist.

9. Drahtloses Kommunikationsverfahren nach Anspruch 7 oder 8, wobei die Informationen eine Anzeige aufweisen, dass der lokale Anbieter des UE ein Mobilfunknetzwerk ist,
oder
wobei die Informationen eine Anzeige aufweisen, dass der lokale Anbieter des UE ein Festnetz ist,
oder
die Informationen eine Anzeige aufweisen, dass das UE über das Internet verbunden ist, wenn die lokale IP-Adresse des UE dem ersten drahtlosen Netzwerkknoten nicht bekannt ist, wobei vorzugsweise die lokale IP-Adresse des UE dem ersten drahtlosen Netzwerkknoten nicht bekannt ist, wenn die lokale IP-Adresse weder zu einem Mobilfunknetzwerk noch zu einem Festnetz gehört.

10. Drahtloses Kommunikationsverfahren nach einem der Ansprüche 7 bis 9, das ferner aufweist:
Übertragen der Informationen an eine Gebührenerfassungsfunktion, vorzugsweise als Teil des Untrusted Wireless Access Network-, UWAN, User-Location Info, und wobei das Verfahren vorzugsweise ferner aufweist:
Übertragen der Informationen an eine Gebührenerfassungsfunktion über einen Multimedia Telephony Application Server, MMTELAS, vorzugsweise als eigener Session Initiation Protocol, SIP, Header oder als Teil eines P-Access-Network-Information-Headers.

11. Erster drahtloser Netzwerkknoten, zur Verwendung, um die Verbindungen zu bestimmen, die an einem Voice over Wireless-Fidelity, VoWifi, Anruf beteiligt sind, der mittels eines Benutzergeräts, UE, durchgeführt wird, wobei der Knoten aufweist:
eine Kommunikationseinheit, die konfiguriert ist:
eine lokale IP-Adresse des UE zu empfangen, und
einen Prozessor, der konfiguriert ist:
zu bestimmen, ob die empfangene lokale IP-Adresse des UE dem ersten drahtlosen Netzwerkknoten bekannt ist, wobei die Kommunikationseinheit ferner konfiguriert ist:
eine Nachricht, die Informationen über die Bestimmung aufweist, an einen zweiten drahtlosen Netzwerkknoten zu übertragen, wobei der erste drahtlose Netzwerkknoten ein Paketdatennetzwerk-Gateway, PGW, oder eine Sitzungsverwaltungsfunktion, SMF, ist.

12. Erster drahtloser Netzwerkknoten nach Anspruch 11, wobei der Prozessor ferner konfiguriert ist, das drahtlose Kommunikationsverfahren nach einem der Ansprüche 2 bis 6 auszuführen.

13. Zweiter drahtloser Netzwerkknoten, zur Verwendung, um die Verbindungen zu bestimmen, die an einem Voice over Wireless-Fidelity, VoWifi, Anruf beteiligt sind, der mittels eines Benutzergeräts, UE, durchgeführt wird, wobei der Knoten aufweist:
eine Kommunikationseinheit, die konfiguriert ist:
von einem ersten drahtlosen Netzwerkknoten eine Nachricht zu empfangen, die Informationen darüber aufweist, ob eine lokale IP-Adresse des UE, die von dem ersten drahtlosen Netzwerkknoten empfangen wird, dem ersten drahtlosen Netzwerkknoten bekannt ist,
wobei der erste drahtlose Netzwerkknoten ein Paketdatennetzwerk-Gateway, PGW, oder eine Sitzungsverwaltungsfunktion, SMF, ist.

14. Zweiter drahtloser Netzwerkknoten nach Anspruch 13, wobei die Kommunikationseinheit ferner konfiguriert ist, das drahtlose Kommunikationsverfahren nach einem der Ansprüche 8 bis 10 auszuführen.

15. Computerprogrammprodukt, das einen computerlesbaren Programmmediencode aufweist, der darauf gespeichert ist, wobei der Code, wenn er von einem Prozessor ausgeführt wird, den Prozessor veranlasst, ein drahtloses Kommunikationsverfahren nach einem der Ansprüche 1 bis 6 oder 7 bis 10 zu auszuführen.

## Revendications

1. Procédé de communication sans fil destiné à être utilisé dans un premier noeud de réseau sans fil, afin de déterminer les connexions impliquées dans un appel vocal par WiFi, VoWifi, effectué au moyen d'un équipement utilisateur, UE, ledit procédé comprenant :
la réception d'une adresse IP locale de l'UE, au niveau du premier noeud de réseau sans fil ;
la détermination si l'adresse IP locale de l'UE reçue est connue du premier noeud de réseau sans fil ; et
la transmission à un deuxième noeud de réseau sans fil d'un message comprenant des informations sur la détermination,
le premier noeud de réseau sans fil étant une passerelle de réseau de données par paquets, PGW, ou une fonction de gestion de session, SMF.

2. Procédé de communication sans fil selon la revendication 1, où le deuxième noeud de réseau sans fil est une fonction de règles de politique et de tarification, PCRF, ou une fonction de commande de session d'appel mandataire, P-CSCF, ou une fonction de commande de politique, PCF.

3. Procédé de communication sans fil selon la revendication 1 ou la revendication 2, où la détermination si l'adresse IP locale d'un UE reçue est connue du premier noeud de réseau sans fil comprend :
la détermination si l'adresse IP locale reçue appartient à un réseau cellulaire.

4. Procédé de communication sans fil selon la revendication 3, où les informations comprennent une indication selon laquelle le fournisseur d'UE local est un réseau cellulaire.

5. Procédé de communication sans fil selon l'une des revendications 1 à 4, où la détermination si l'adresse IP locale d'un UE reçue est connue du premier noeud de réseau sans fil comprend : la détermination si l'adresse IP locale reçue appartient à un réseau fixe, et où les informations comprennent préférentiellement une indication selon laquelle le fournisseur d'UE local est un réseau fixe.

6. Procédé de communication sans fil selon l'une des revendications 1 à 5, où les informations comprennent une indication selon laquelle l'UE est connecté via Internet si l'adresse IP locale de l'UE reçue n'est pas connue du premier noeud de réseau sans fil, l'adresse IP locale de l'UE reçue étant préférentiellement inconnue du premier noeud de réseau sans fil lorsque l'adresse IP locale de l'UE reçue n'appartient ni à un réseau cellulaire, ni à un réseau fixe.

7. Procédé de communication sans fil destiné à être utilisé dans un deuxième noeud de réseau sans fil, afin de déterminer les connexions impliquées dans un appel vocal par WiFi, VoWifi, effectué au moyen d'un équipement utilisateur, UE, ledit procédé comprenant :
la réception d'un message provenant d'un premier noeud de réseau sans fil, comprenant des informations indiquant si une adresse IP locale de l'UE reçue par le premier noeud de réseau sans fil est connue du premier noeud de réseau sans fil, ledit premier noeud de réseau sans fil étant une passerelle de réseau de données par paquets, PGW, ou une fonction de gestion de session, SMF.

8. Procédé de communication sans fil selon la revendication 7, où le deuxième noeud de réseau sans fil est une fonction de règles de politique et de tarification, PCRF, ou une fonction de commande de politique, PCF.

9. Procédé de communication sans fil selon la revendication 7 ou la revendication 8, où les informations comprennent une indication selon laquelle le fournisseur local de l'UE est un réseau cellulaire,
ou
où les informations comprennent une indication selon laquelle le fournisseur local de l'UE est un réseau fixe,
ou
les informations comprennent une indication selon laquelle l'UE est connecté via Internet si l'adresse IP locale de l'UE n'est pas connue du premier noeud de réseau sans fil, l'adresse IP locale de l'UE étant préférentiellement inconnue du premier noeud de réseau sans fil lorsque l'adresse IP locale de l'UE n'appartient ni à un réseau cellulaire, ni à un réseau fixe.

10. Procédé de communication sans fil selon l'une des revendications 7 à 9, comprenant en outre :
la transmission des informations à une fonction de tarification, préférentiellement en tant que partie des informations de localisation d'utilisateur de réseau d'accès sans fil non sécurisé, UWAN, et ledit procédé comprenant préférentiellement en outre :
la transmission des informations à une fonction de tarification via un serveur d'application de téléphonie multimédia, MMTELAS, préférentiellement en tant qu'en-tête de protocole d'ouverture de session propre, SIP, ou en tant que partie d'un en-tête d'informations de réseau d'accès P.

11. Premier noeud de réseau sans fil, destiné à être utilisé afin de déterminer les connexions impliquées dans un appel vocal par WiFi, VoWifi, effectué au moyen d'un équipement utilisateur, UE, ledit noeud comprenant :
une unité de communication, configurée pour :
recevoir une adresse IP locale de l'UE ; et
un processeur configuré pour :
déterminer si l'adresse IP locale de l'UE reçue est connue du premier noeud de réseau sans fil,
ladite unité de communication étant en outre configurée pour :
transmettre un message comprenant des informations sur la détermination à un deuxième noeud de réseau sans fil, le premier noeud de réseau sans fil étant une passerelle de réseau de données par paquets, PGW, ou une fonction de gestion de session, SMF.

12. Premier noeud de réseau sans fil selon la revendication 11, où le processeur est en outre configuré pour exécuter le procédé de communication sans fil selon l'une des revendications 2 à 6.

13. Deuxième noeud de réseau sans fil, destiné à être utilisé afin de déterminer les connexions impliquées dans un appel vocal par WiFi, VoWifi, effectué au moyen d'un équipement utilisateur, UE, ledit noeud comprenant :
une unité de communication, configurée pour :
recevoir, d'un premier noeud de réseau sans fil, un message comprenant des informations indiquant si une adresse IP locale de l'UE reçue par le premier noeud de réseau sans fil est connue du premier noeud de réseau sans fil,
ledit premier noeud de réseau sans fil étant une passerelle de réseau de données par paquets, PGW, ou une fonction de gestion de session, SMF.

14. Deuxième noeud de réseau sans fil selon la revendication 13, où l'unité de communication est en outre configurée pour exécuter le procédé de communication sans fil selon l'une des revendications 8 à 10.

15. Produit de programme informatique, où est stocké un code de programme lisible par ordinateur, dont l'exécution par un processeur entraîne ledit processeur à mettre en oeuvre un procédé de communication sans fil selon l'une des revendications 1 à 6, ou des revendications 7 à 10.
